# EUROPÄISCHE PATENTSCHRIFT

(11) **EP 2 470 801 B1**
(45) Veröffentlichungstag und Bekanntmachung des Hinweises auf die Patenterteilung: **30.09.2015**
(21) Anmeldenummer: 10751878.9
(22) Anmeldetag: 24.08.2010
(51) Int. Cl.: F16B 25/10

(54) **SCHRAUBE**
SCREW
VIS

(30) Priorität: 26.08.2009 DE 102009039946
(43) Veröffentlichungstag der Anmeldung: 04.07.2012
(73) Patentinhaber: Schmid Schrauben Hainfeld Gesellschaft m.b.H., 3170 Hainfeld (AT)
(72) Erfinder: LEB, Gerhard, A-3204 Kirchberg (AT)
(74) Vertreter: Patentanwälte Ruff, Wilhelm, Beier, Dauster & Partner
(86) Internationale Anmeldenummer: PCT/EP2010/062278
(87) Internationale Veröffentlichungsnummer: WO 2011/023666

(56) Entgegenhaltungen:
- GB-A- 251 409
- US-A- 1 827 615
- US-A- 3 233 500
- US-A- 3 942 405
- US-A1- 2003 235 483
- US-A1- 2008 014 047
- US-A1- 2009 047 096

## Beschreibung

Die Erfindung geht aus von einer Schraube mit einer kegelförmig zulaufenden in einer punktförmigen Spitze endenden Schraubenspitze. Solche Schrauben werden häufig Spanplattenschrauben genannt, sind aber auch für andere Materialien holzähnlicher Struktur geeignet.

Bei Schrauben dieser Art reicht das Schraubengewinde bis nahe an die punktförmige Schraubenspitze heran, erstreckt sich also über die kegelförmige Schraubenspitze. Die Schraube soll ohne Vorbohren verwendet werden können, trotzdem aber sehr schnell greifen, damit der weitere Vorschub durch das Gewinde bestimmt wird. Bei der Verwendung in Holz besteht jedoch die Gefahr, dass wegen der Keilwirkung der kegelförmigen Schraubenspitze Risse auftreten können. Dies verringert natürlich die Haltbarkeit einer Schraubenverbindung.

Es ist bereits eine Schraube vorgeschlagen worden, die innerhalb der kegelförmigen Schraubenspitze einen Ring aufweist, der in einer Ebene quer zur Längsachse verläuft und eine scharfe Kante bildet. Damit kann ein verringertes Einschraubdrehmoment und eine Verringerung der Spaltwirkung in Holz erzielt werden (DE 102007024223).

Zur Verringerung der Spaltwirkung sind weiterhin Schabenuten bekannt, deren Ränder Schabekanten bilden, die in der Oberfläche der Schraubenspitze liegen.

Weiterhin bekannt sind Schrauben, bei denen innerhalb der Schraubenspitze Rippen mit Schabekanten vorhanden sind, wobei die Rippen dann über die Oberfläche der Schraubenspitze vorspringen. Diese Rippen verlaufen aber in Längsrichtung der Schraube.

**Es ist bereits eine Schraube mit einem von einer kegelförmigen** Schraubenspitze ausgehenden Doppelganggewinde bekannt, bei der ein Gang des Doppelganggewindes etwa auf halber Schaftlänge endet, während der andere Gang als Grobgewinde weiterführt. Die Gewindegänge beider Gewinde haben die gleiche Steigung (US 2008/0014047 A1).

Ebenfalls bekannt ist eine Schraube, die zusätzlich zu ihrem normalen Schraubengewinde im Bereich ihrer Schraubenspitze zwei schräg verlaufende Schabekanten aufweist, die sich um etwa den halben Umfang des Schraubenschafts herum erstrecken und daher kein Gewinde bilden (US 2003/0235483 A1).

Der Erfindung liegt die Aufgabe zu Grunde, eine selbstbohrende Schraube zu schaffen, die einerseits schnell eingeschraubt werden kann, andererseits aber eine verringerte Spaltwirkung aufweist.

Zur Lösung dieser Aufgabe schlägt die Erfindung eine selbstbohrende Schraube mit den im Anspruch 1 genannten Merkmalen vor. Weiterbildungen der Erfindung sind Gegenstand von Unteransprüchen.

Zusätzlich zu dem normalen Schraubengewinde, das bis in die kegelförmige Schraubenspitze reicht und für den Vortrieb und für die Haltekraft der Schraube sorgt, hat die Schraube nach der Erfindung ein Zusatzgewinde, das die Aufgabe der Verhinderung der Spaltung des Holzes und damit des Entstehens von Rissen übernimmt.

Da das Entstehen von Rissen durch die Spaltwirkung der Keilspitze verursacht wird, reicht dies nach einem weiteren Merkmal der Erfindung aus, wenn das Zusatzgewinde zwischen einem und zwei Gewindegängen aufweist.

Erfindungsgemäß kann in Weiterbildung vorgesehen sein, dass das Zusatzgewinde die gleiche Gewindeorientierung aufweist wie das Schraubengewinde, also üblicherweise ein Rechtsgewinde bildet.

Erfindungsgemäß ist vorgesehen, dass das Schraubengewinde und das Zusatzgewinde eine unterschiedliche Gewindesteigung aufweisen, **nämlich** das Zusatzgewinde eine kleinere Steigung aufweist als das Schraubengewinde, **insbesondere** also deutlich flacher ausgebildet ist.

Insbesondere kann vorgesehen sein, dass das Zusatzgewinde eine Steigung aufweist, die im Bereich von etwa 50 % bis etwa 70 % der Steigung des Schraubengewindes liegt. Beispielsweise weist das Zusatzgewinde eine Steigung von 6,5° auf.

Erfindungsgemäß kann ebenfalls vorgesehen sein, dass das Zusatzgewinde eine geringere Profilhöhe aufweist als das Schraubengewinde. Diese kann beispielsweise bei 0,25 mm liegen.

Erfindungsgemäß kann in Weiterbildung vorgesehen sein, dass das Zusatzgewinde einen größeren Flankenwinkel aufweist als das Schraubengewinde. Während es sich bei dem Schraubengewinde um ein Grobganggewinde mit beispielsweise 40° Flankenwinkel handeln kann, kann in Weiterbildung das Zusatzgewinde einem Flankenwinkel von beispielsweise 60° aufweisen.

Um sicherzustellen, dass die Einschraubgeschwindigkeit nicht abnimmt und der Einschraubwiderstand nicht zunimmt, kann erfindungsgemäß in Weiterbildung vorgesehen sein, dass das Zusatzgewinde in Längsrichtung der Schraube hinter dem Schraubengewinde beginnt, als auch mit einem Abstand von der Spitze der Schraubenspitze.

Es ist aber ebenfalls möglich und wird von der Erfindung vorgeschlagen, dass das Zusatzgewinde an der gleichen axialen Stelle beginnt wie das Schraubgewinde.

Insbesondere kann vorgesehen sein, dass das Zusatzgewinde die Querschnittsform eines Trapezes aufweist, so dass keine scharfe Gewindekante gebildet ist, sondern eine Abflachung.

Weitere Merkmale, Einzelheiten und Vorzüge der Erfindung ergeben sich aus den Ansprüchen, der folgenden Beschreibung bevorzugter Ausführungsformen der Erfindung sowie anhand der Zeichnung. Hierbei zeigen:
- Figur 1: eine Seitenansicht des vorderen Endes einer Schraube nach der Erfindung;
- Figur 2: eine der Figur 1 entsprechende Darstellung einer zweiten Ausführungsform;
- Figur 3: in vergrößertem Maßstab die Form des Zusatzgewindes.

Die in der Figur nur in ihrem vorderen Bereich dargestellte Schraube enthält einen Schraubenschaft 1, an dessen oberen in der Figur nicht dargestellten Ende ein Schraubenantrieb ausgebildet ist, beispielsweise ein Senkkopf mit einer darin enthaltenen Schraubenantriebsvertiefung. Der Schaft 1 ist zylindrisch und setzt sich an seinem vorderen dem Schraubenkopf abgewandten Ende in eine kegelförmige Schraubenspitze 2 fort. Diese kegelförmige Schraubenspitze 2 endet in einer punktförmigen Spitze 3. Über den Schraubenschaft 1 erstreckt sich ein Schraubengewinde 4, bei dem es sich beispielsweise um ein Spanplattengewinde handelt. Das Gewinde 4 erstreckt sich auch über die Schraubenspitze 2 und reicht bis fast zu der Spitze 3. In diesem Bereich nimmt die Profilhöhe des Schraubengewindes 4 allmählich ab. Der Grund dafür, dass das Schraubengewinde 4 bis in die Spitze 2 hineinreicht, liegt darin, dass die Schraube möglichst schnell nach dem Ansetzen mithilfe des Schraubengewindes 4 einen Vorschub erzeugen soll.

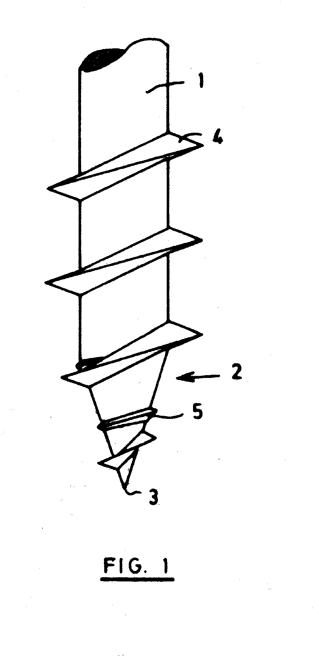

Zusätzlich enthält die in Figur 1 dargestellte Schraube ein Zusatzgewinde 5, das ebenfalls innerhalb der Schraubenspitze 2 beginnt, beispielsweise direkt hinter dem Schraubenschaft, der in Figur 1 ja nur von einer Seite aus dargestellt ist. Dieses Zusatzgewinde 5 reicht bis in den zylindrischen Teil des Schraubenschafts 1 und endet dort. Es hat beispielsweise zwei Gewindegänge. Die Profilhöhe des Zusatzgewindes 5 ist, wie man der Figur 1 ebenfalls entnehmen kann, deutlich niedriger als die Profilhöhe des Schraubengewindes 4.

Das Zusatzgewinde 5 hat die gleiche Gewindeorientierung wie das Schraubengewinde 4, ist also ebenfalls ein Rechtsgewinde. Die Steigung ist deutlich niedriger. Sie liegt beispielsweise bei 60 % der Steigung des Schraubengewindes.

Während das Schraubengewinde 4 einen Flankenwinkel von 40° hat, hat im dargestellten Beispiel das Zusatzgewinde einem Flankenwinkel von 60°. Der Flankenwinkel des Zusatzgewindes ist also größer als der Flankenwinkel des Schraubengewindes.

Die Schraubenspitze 2 weist im dargestellten Beispiel einen Kegelwinkel von etwa 34° auf.

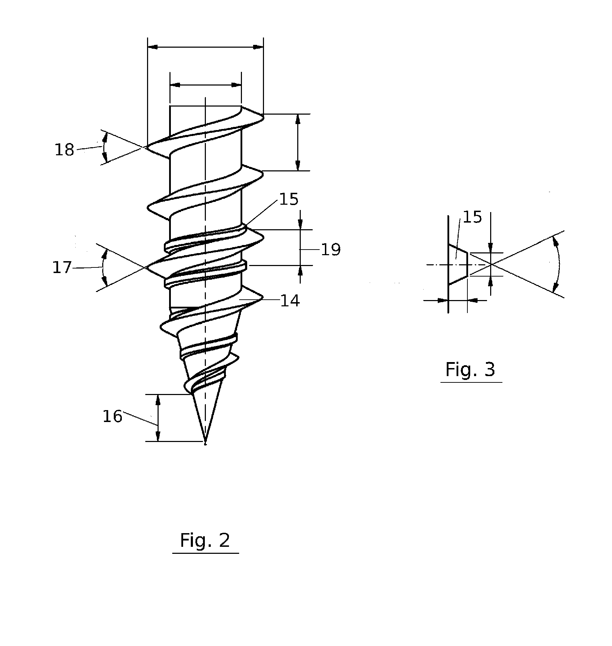

Bei der in der Figur 2 dargestellten Ausführungsform beginnt sowohl das Schraubgewinde 14 als auch das Zusatzgewinde 15 im gleichen Abstand 16 von der Schraubenspitze 3. Das Zusatzgewinde 15 weist hier fünf Windungen auf.

Das Schraubgewinde 14 hat eine zunehmende Gewindehöhe. Im Übergangsbereich zwischen den kegelförmigen Teil des Schraubenschafts und dem zylindrischen Teil des Schraubenschafts nimmt das Schraubengewinde 14 seine volle Höhe auf. Daran anschließend beträgt der Flankenwinkel 17 etwa 50°, während er im weiteren Verlauf der Schraube bis auf 40° zurück geht.

Auch hier beträgt die Steigung 19 des Zusatzgewindes 15 etwa 60 - 70 % der Steigung des Schraubgewindes 14.

Aus der vergrößerten Detailzeichnung der Figur 3 geht die Querschnittsform des Zusatzgewinde 15 hervor. Der Flankenwinkel beträgt etwa 50°, die Querschnittsform entspricht einem Trapez.

## Patentansprüche

1. Schraube, mit
1.1 einem Schraubenkopf,
1.2 einem Schraubenschaft (1),
1.3 einer mindestens angenähert kegelförmigen Schraubenspitze (2) und
1.4 einem **Schraubgewinde** (4, 14),
1.4.1 das sich bis in die Schraubenspitze erstreckt (2), sowie mit
1.5 einem Zusatzgewinde (5, 15),
1.5.1 dessen Gewindegang innerhalb der **kegelförmigen** Schraubenspitze (2) beginnt, bis in den Schaft (1) reicht **und eine kleinere Steigung aufweist als das Schraubgewinde (4, 14).**

2. Schraube nach Anspruch 1, bei der das Zusatzgewinde (5, 15) zwischen einem und fünf Gewindegänge aufweist.

3. Schraube nach Anspruch 1 oder 2, bei der das Zusatzgewinde (5, 15) die gleiche Gewindeorientierung aufweist wie das Schraubengewinde (4, 14).

4. Schraube nach **einem der vorhergehenden Ansprüche,** bei der das Zusatzgewinde (5, 15) eine Steigung von 60 % - 70 % der Steigung des Schraubengewindes (4, 14) aufweist.

5. Schraube nach einem der vorhergehenden Ansprüche, bei der das Zusatzgewinde (5, 15) eine geringere Profilhöhe aufweist als das Schraubengewinde (4, 14).

6. Schraube nach einem der vorhergehenden Ansprüche, bei der das Zusatzgewinde (5, 15) einen größeren Flankenwinkel aufweist als das Schraubengewinde (4, 14).

7. Schraube nach einem der vorhergehenden Ansprüche, bei der das Zusatzgewinde (5, 15) mit einem Abstand (16) von der Spitze (3) der Schraubenspitze (2) beginnt.

8. Schraube nach einem der vorhergehenden Ansprüche, bei der das Zusatzgewinde (5) in Längsrichtung der Schraube gesehen hinter dem Schraubengewinde (4) beginnt.

9. Schraube nach einem der Ansprüche 1 - 7, bei der das Zusatzgewinde (15) an der gleichen Stelle wie das Schraubengewinde (14) beginnt.

10. Schraube nach einem der vorhergehenden Ansprüche, bei der das Zusatzgewinde (15) die Querschnittsform eines Trapezes aufweist.

11. Schraube nach einem der vorhergehenden Ansprüche, bei der der Flankenwinkel (17, 18) des Schraubengewindes (14) über die Länge der Schraube nicht konstant ist.

## Claims

1. A screw, having
1.1 a screw head,
1.2 a screw shaft (1),
1.3 an at least approximately conical screw tip (2) and
1.4 a screw thread (4, 14)
1.4.1 extending up to the screw tip (2), and having
1.5 an additional thread (5, 15),
1.5.1 the thread turn thereof starting within the conical screw tip (2), reaching up to the shaft (1) and presenting a smaller pitch than the screw thread (4, 14).

2. The screw according to claim 1, wherein the additional thread (5, 15) includes between one and five thread turns.

3. The screw according to claim 1 or 2, wherein the additional thread (5, 15) has a thread orientation similar to that of the screw thread (4, 14).

4. The screw according to any one of the preceding claims, wherein the additional thread (5, 15) has a pitch of 60 % to 70 % of the pitch of the screw thread (4, 14).

5. The screw according to any one of the preceding claims, wherein the additional thread (5, 15) has a smaller profile height than the screw thread (4, 14).

6. The screw according to any one of the preceding claims, wherein the additional thread (5, 15) has a greater thread angle than the screw thread (4, 14).

7. The screw according to any one of the preceding claims, wherein the additional thread (5, 15) starts with a distance (16) from the tip (3) of the screw tip (2).

8. The screw according to any one of the preceding claims, wherein the additional thread (5) starts behind the screw thread (4), as viewed in the longitudinal direction of the screw.

9. The screw according to any one of claims 1 to 7, wherein the additional thread (15) starts at the same location as the screw thread (14).

10. The screw according to any one of the preceding claims, wherein the additional thread (15) has a trapezoidal cross sectional shape.

11. The screw according to any one of the preceding claims, wherein the thread angle (17, 18) of the screw thread (14) is not constant along the length of the screw.

## Revendications

1. Vis, avec
1.1 une tête de vis,
1.2 une tige de vis (1),
1.3 une pointe de vis (2) au moins approximativement conique, et
1.4 un filet de vis (4, 14),
1.4.1 qui s'étend jusque dans la pointe de vis (2), ainsi qu'avec
1.5 un filet additionnel (5, 15),
1.5.1 dont le pas de vis commence à l'intérieur de la pointe de vis conique (2), se poursuit jusque dans la tige (1) et présente un pas plus petit que le filet de vis (4, 14).

2. Vis selon la revendication 1, dans laquelle le filet additionnel (5, 15) présente entre une et cinq spires.

3. Vis selon la revendication 1 ou 2, dans laquelle le filet additionnel (5, 15) présente la même orientation du filet que le filet de vis (4, 14).

4. Vis selon l'une quelconque des revendications précédentes, dans laquelle le filet additionnel (5, 15) présente un pas de 60 % à 70 % du pas du filet de vis (4, 14).

5. Vis selon l'une quelconque des revendications précédentes, dans laquelle le filet additionnel (5, 15) présente une plus faible hauteur de profil que le filet de vis (4, 14).

6. Vis selon l'une quelconque des revendications précédentes, dans laquelle le filet additionnel (5, 15) présente un plus grand angle de flancs que le filet de vis (4, 14).

7. Vis selon l'une quelconque des revendications précédentes, dans laquelle le filet additionnel (5, 15) commence à une distance (16) de la pointe (3) de la pointe de vis (2).

8. Vis selon l'une quelconque des revendications précédentes, dans laquelle le filet additionnel (5) commence derrière le filet de vis (4), considéré dans la direction longitudinale de la vis.

9. Vis selon l'une quelconque des revendications 1 à 7, dans laquelle le filet additionnel (15) commence au même point que le filet de vis (14).

10. Vis selon l'une quelconque des revendications précédentes, dans laquelle le filet additionnel (15) présente une section transversale en forme de trapèze.

11. Vis selon l'une quelconque des revendications précédentes, dans laquelle l'angle de flancs (17, 18) du filet de vis (14) n'est pas constant sur la longueur de la vis.
